# EUROPEAN PATENT APPLICATION

(11) **EP 4 572 233 A1**
(43) Date of publication of application: **18.06.2025**
(21) Application number: 23307204.0
(22) Date of filing: 14.12.2023
(51) Int. Cl.: H04L 9/40, H04W 12/041, H04W 12/06

(54) **METHOD TO PERFORM A MUTUAL AUTHENTICATION**

(71) Applicant: THALES DIS FRANCE SAS, 92190 Meudon (FR)
(72) Inventor: DANY, Vincent, 13400 Aubagne (FR); FINE, Jean-Yves, 13010 Marseille (FR); PAULIAC, Mireille, 13470 Carnoux En Provence (FR); ANSLOT, Michel, 06250 Mougins (FR)
(74) Representative: Castelo, Jérôme

(57) **Abstract**

The invention relates to a method to perform a mutual authentication according to a predefined authentication scheme between a User Equipment UE and a 5G communication serving ground network in a context where the UE having a Subscription Permanent Identifier (SUPI) registered at a home network is connected via a non-geostationary satellite access in store and forward operation. The invention proposes to reverse the authentication flow by initiating the authentication flow on the UE side.

## Description

### Field of the invention

The present invention relates to a method to perform a mutual authentication between a User Equipment UE and a 5G communication serving ground network in a context where the UE having a Subscription Permanent Identifier (SUPI) registered at a home network is connected via a non-geostationary satellite access in store and forward operation. The invention also pertains to a user equipment and a communication serving ground network using said method. The present invention also applies to 4G network in store and forward situations.

### Background of the invention

The invention addresses the context of 5G communication where a communication device, designated by the acronym UE in the following, may be in communication with a ground network via a satellite access. In such context, the store and forward operation, S&F in the following, in a 5G system with satellite access is intended to provide some level of communication service for UEs under satellite coverage with intermittent/temporary satellite connectivity. Typically, such situation occurs when the satellite is not connected via a feeder link or via inter-satellite links ISL to the ground network for delay-tolerant communication service. The support of S&F satellite operation is especially suited for the delivery of delay-tolerant/non-real-time IoT satellite services with NGSO satellites (Non Geostationary). It is here noted that, even if 5G communications are specifically addressed, such a store and forward situation already exists in 4G where the invention is applicable.

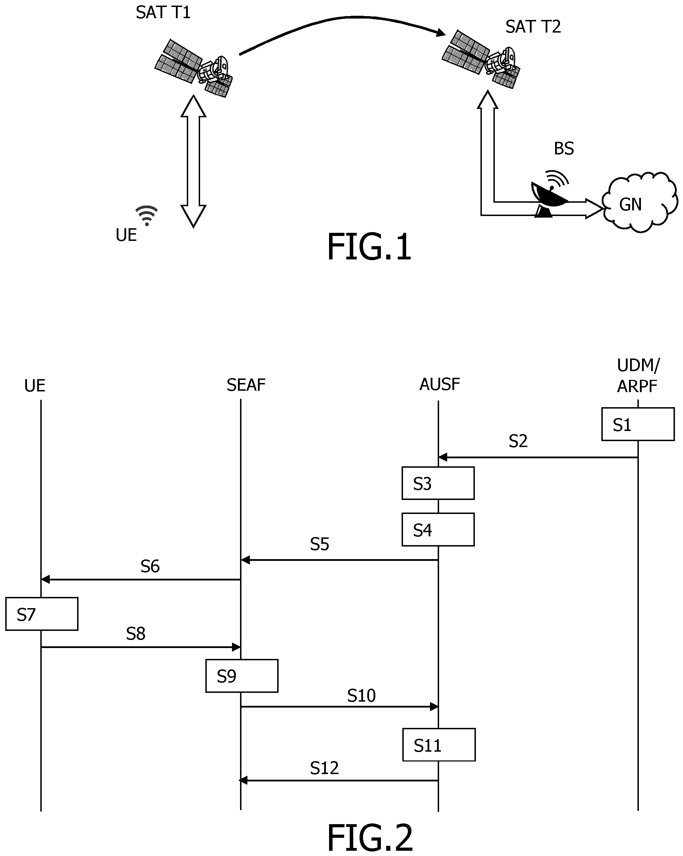

An actual 5G authentication flow is as described in the 3GPP document TS33.501 §6.1.3.2 (AKA flow) and presented in [Figs 1 and 2].

This flow is not suitable for a S&F use case because it supposes to be achieved in tens of seconds with continuous connectivity between UE and core network. The store and forward use case cannot guarantee such conditions.

Further alternative and advantageous solutions would, accordingly, be desirable in the art.

### Summary of the invention

The present invention aims at providing a mutual authentication method compatible with the store and forward context.

The present invention is defined, in its broadest sense, as a method to perform a mutual authentication according to a predefined authentication scheme between a User Equipment UE and a communication serving ground network in a context where the UE having a permanent subscription identifier registered at a home network is connected via a non-geostationary satellite access in store and forward operation, said method comprising the steps of:
- for the UE, having first User Plane data to transmit, generating a random and UE authentication key hierarchy based on the random;
- for the UE, creating an authentication vector including the generated random, an authentication token, an expected result and generated keys as required by predefined authentication-scheme;
- for the UE, protect first User Plane data using generated authentication keys as defined in predefined authentication scheme;
- for the UE, while connected to the satellite, sending, for storage and forward, the authentication vector, the permanent subscription identifier and the protected first user plane data to the satellite;
- for the satellite, once connected to a serving ground network, forwarding the authentication vector, the permanent subscription identifier and the protected first user plane data to the serving ground network;
- for the serving ground network, storing an authentication expected result being part of the authentication vector and the protected first user plane data;
- for the serving ground network, forwarding the random, the authentication token and the permanent subscription identifier to the home network;
- for the home network, through a home network entity in charge of subscription information, verifying the authentication token, computing a Home Network key hierarchy and a Result;
- for the home network, sending the Result, generated keys as required by predefined authentication scheme and the permanent subscription identifier to the serving ground network;
- for the serving ground network, processing the encrypted first data to get first response data and protecting the first response data using corresponding received keys;
- for the serving ground network, sending the Result and the protected first response data to the satellite for storage and forward;
- for the satellite, once the satellite is again in connection with the UE, forwarding the Result and the protected first response data;
- for the UE, verifying the result and processing the protected first response data.

The invention proposes to reverse roles. More precisely, the invention proposes to partly reverse the authentication flow by initiating the authentication flow on the UE side while the authentication flow is currently always defined with an initiation by the network side. By reversing roles between UE and network while keeping the predefined authentication scheme, it enables an Authentication and Key Agreement mutual scheme, with same security level as the one described in the standardized solution.

This reversed roles, because UE is originating the procedure, enable to cope with the connection discontinuity introduced by intermittent satellite coverage.

The invention enables a data message to be sent by the UE to be included with the authentication message. This is all the more interesting for IoT devices that only have one data stream to send. In any case, the invention divides by two the number of connections with the satellite, i.e. two instead of four.

It is necessary for the serving ground network to store not only the protected first user plane data but also an expected result HXRES*. This is the authentication result expected to be provided by the Unified Data Management entity (UDM) and that will serve as comparison to know if the result as provided by the UDM is correct. This HXRES* is part of the authentication vector and is not transmitted to the AUSF. Only RAND and AUTN are transmitted with the SUCI.

It is here noted that the processing of the encrypted first data comprises, for the serving ground network, a sub step of sending the encrypted first data to a User Plane Function, for this function to return first response data as got by the serving ground network.

In the meaning of the invention the term « protection » refers not only to encryption but also to integrity via the use of User Plane encryption key and UP integrity key with algorithms as defined in the predefined authentication scheme. Such predefined authentication schemes, in 5G, in annex D of 33.501. The data and response are thus secured in confidentiality and integrity.

In terrestrial network, in some case, derived user plane encryption and integrity keys, might be re-use to avoid the necessity to redo a full authentication when some derived keys are still valid. But if derivated keys are not valid anymore, the request is rejected and full authentication is launched. With the invention, there is no interest to try to reuse derived keys as it introduces the risk of an additional exchange with the ground network if the keys are not anymore valid for the home network.

The invention also enables to optimize the satellite communication by including user data attached to signaling NAS message in any service link, including the initial ones during authentication, in maintaining, at each step, 5G security level.

It is here noted that the term "satellite" designates potentially different physical satellite as soon as the satellite of the reconnection can be in communication with the first satellite to which the first data were sent or directly with the serving ground network.

According to a specific embodiment, the UE and the serving network operating in 5G and the permanent subscription identifier being a Subscription Permanent Identifier (SUPI), the method further comprises the step, for the UE, of calculating a Subscription Concealed Identifier (SUCI) from the SUPI of the UE, and, for the home network, the step of deconcealing the SUPI from the SUCI through a Unified Data Management entity home network entity in charge of subscription information, before verification of the authentication token.

This embodiment corresponds to the implementation of the invention in the 5G context where specific authentication schemes are predefined, those predefined schemes implying a concealing of the permanent subscription identifier.

According to a particular feature, said method further includes a preliminary step of, for the UE and the satellite, setting up a secure channel in order to mutually authenticate each other.

This feature enables to protect the satellite from deny of service attacks where a fake device would send a lot of requests to saturate the storage capacity of the satellite.

According to an implementation of the invention, wherein the UE comprising an USIM, said steps of authentication vector creation and verification of the result are performed in the USIM.

This implementation is more secure not only for the storage of primary keys but also for the execution of the authentication algorithms.

According to a specific feature, the step of, for the UE, creating an authentication vector is such that the authentication vector is created with a dedicated Authentication Management Field (AMF) separation bit set to " 1 ".

This feature is useful in terms of security if the subscription is to be used in both modes, i.e. in the "normal" mode when the device is in terrestrial coverage, and in store and forward "S&F" mode. It protects against an attack that would consist in having the card generating Authentication Vectors and then use them in a false network in terrestrial coverage The anti-replay counter offers already some protection but by having this dedicated bit, it is always possible to differentiate an Authentication Vector in "normal" mode from an Authentication Vector in S&F mode.

According to an alternative feature, the key hierarchy generation being further based on the use of a long-term key and the UE being also configured to implement an authentication of the art with a long-term key, the long-term key of said authentication method is distinct from the long-term key used for the authentication with terrestrial network.

Having two long term keys, one for "normal" mode and another for S&F mode, de facto enables to distinguish the currently active mode.

According to a particular feature, the method further includes the steps of, for the serving ground network:
- storing an integrity value of the expected result while storing the protected first user plane data in order to later on check the authenticity of the authentication token,
- calculating an integrity value of the Result received from the home network and comparing it to the stored one. This particular feature enables the serving ground network to also authenticate the home network.

The present invention also relates to a user equipment and a serving ground network comprising means to execute the method of mutual authentication of the invention.

The present invention thus relates to a user equipment adapted to perform a mutual authentication with a communication serving ground network according to a predefined authentication scheme, said mutual authentication originating at the UE side in a context where said UE has a permanent subscription identifier registered at a home network and where said UE is connected via a non-geostationary satellite access in store and forward operation, said UE being configured to, when having first User Plane data to transmit:
- generate a random and a UE authentication key hierarchy;
- create an authentication vector including the generated random, an authentication token, an expected result and generated keys as required by predefined authentication scheme;
- protect first User Plane data using generated authentication keys as defined in predefined authentication scheme;
- while connected to the satellite, send, for storage and forward, the authentication vector, the permanent subscription identifier and the protected first user plane data to the satellite;
- once the satellite is again in connection with the UE, receive a Result and a protected first response data;
- verify the result and processing the protected first response data.

The invention also relates to a communication serving ground network adapted to perform a mutual authentication with a User Equipment UE according to a predefined authentication scheme, said mutual authentication originating at the UE side in a context where said UE has a permanent subscription identifier registered at a home network and where said UE is connected via a non-geostationary satellite access in store and forward operation, said serving ground network being configured to:
- receive from a satellite connected to the serving ground network, an authentication vector including a generated random, an authentication token, an expected result and generated keys as required by predefined authentication scheme, a permanent subscription identifier and a protected first user plane data;
- store the protected first user plane data;
- forward the random, the authentication token and the permanent subscription identifier to the home network of the UE;
- receive from the home network a Result computed by the home network, verification of the authentication token, generated keys of a Home Network key hierarchy also computed by the home network as required by predefined authentication scheme and the permanent subscription identifier;
- process the encrypted first data in first response data and protect the first response data using corresponding received keys;
- send the Result and the protected first response data to the satellite for storage and forward to the UE once the satellite is again in connection with the UE.

To the accomplishment of the foregoing and related ends, one or more embodiments comprise the features hereinafter fully described and particularly pointed out in the claims.

### Brief description of the drawings

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
[Fig 1] shows an environment where the authentication flow of the prior art is not adapted;
[Fig 2] represents an authentication flow as described in the prior art; and
[Fig 3] represents an authentication flow of the invention.

### Detailed description of embodiments of the invention

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

[Fig 1] represents a store and forward environment in which the invention finds an interest. In this environment, at a first point of time T 1, a non-geostationary satellite SAT is at a first position. The satellite SAT is able to operate a service link without an active feeder link connection.

At the first point of time T1, a signaling/data exchange between a communication device UE and the satellite takes place without the satellite being simultaneously connected to the ground network.

In the context of the invention, the satellite SAT moves to a second position reached at a second point of time T2. At this second point of time T2, the connectivity between the satellite SAT and the ground network GN is established and communication between the satellite SAT and the ground network GN can take place. Thus, the satellite SAT moves from being connected to the UE at the first point of time T1 to being connected to the ground network at a second point of time.

Secure communication in any cellular network is advantageously achieved via an AKA procedure involving mutual authentication between a UE and a network. It derives crypto keys to protect the U-plane and C-plane data. Such keys belong to a key hierarchy which is known besides as defined in standardization documents. This key hierarchy evolves for each standard generation.

Authentication mechanisms allow only legitimate users to access network and reject unauthorized users.

Three authentication methods, namely SG-Authentication and Key Management (5G-AKA), Extensible Authentication Protocol - Authentication a Key Management (EAP-AKA') and Extensible Authentication Protocol - Transport Layer Security (EP - TLS) have thus been described in the standardization discussions. Such authentication mechanisms address the very critical concerns of security and privacy by supporting user authentication, signaling integrity, and signaling confidentiality among other security properties.

In a general way, the 3GPP AKA protocol works on challenge-and-response authentication protocol based on a symmetric key shared between a UE and a Network. After the mutual authentication between a UE and a home network, crypto keys are derived to protect further communication between the UE and a serving ground network, including C-plane and U-plane data.

[Fig 2] shows a flowchart of a mutual device and network Authentication and Key Agreement, AKA in the following, as disclosed in prior art where 5G AKA and EAP-AKA' are mandatory 5G primary authentication methods. Such a mutual authentication between the UE and the network is the second phase of the authentication procedure which comprises a preliminary first phase of authentication initiation and selection of authentication method.

[Fig 2] shows a unified authentication framework supported by a Service Based Architecture for Core network with new network entities and new services. With such a framework, 5G AKA procedure is suitable for both open network and access-network regardless of the authentication method used, namely 5G-AKA, EAP-AKA', and EAP-TLS. The unified framework allows multiple security contexts which are established with a single authentication execution. It enables the UE to move from a 3GPP access network to a non-3GPP network without having to be reauthenticated. The framework includes specific network function in Core network.

Among these functions, an Access and Mobility Management Function (AMF) receives all connection and session related information from the UE. It is responsible for handling connection and mobility management tasks only.

A Security Anchor Function (SEAF) located in serving ground network acts as intermediate during the authentication process between a UE and its home network. It relies on the home network of the UE to accept the authentication but can reject an authentication from the UE. It is advantageously installed close to AMF.

An Authentication Server Function (AUSF) operates within a home network. It performs authentication with a UE and makes the decision on UE authentication. However, when SG-AKA or EAP-AKA' is used, the AUSF relies on backend for computing the authentication data and Keys.

A Unified data management (UDM) is similar to HSS/HLR entity in legacy. It hosts functions related to data management. In particular it hosts an Authentication Credential Repository and Processing Function (ARPF), the role of which being to select an authentication method based on subscriber identity and configured policy and to compute, whenever required, the authentication data and Keys for the AUSF.

In 5G, new services have also been defined among which are an authentication service provided by the AUSF through Nausf_UEAuthentication and an authentication service provided by the UDM through Nudm_UEAuthentication services.

According to the authentication procedure, after selection of an authentication method, a mutual authentication as illustrated on [Fig 2] takes place. In a first step S1, an Authentication Vector (AV) is derived at the UDM/ARPF.

According to the 5G AKA, an intermediate key KAUSF is derived from a cipher key CK, an integrity key IK and a serving ground network name SNN and a 5G Home Environment Authentication Vector (5G HE AV) is generated. The 5G HE AV contains a random RAND, an authentication token AUTN, an expected result XRES*, and KAUSF. In a step S2, the 5G HE AV is sent to the AUSF in an authentication information Request Response message Nudm_UEAuthentication_Get Response.

In a step S3, the AUSF stores the KAUSF and XRES*, which is derived from the Result RES and the random RAND until expiry and derives an anchor key KSEAF from KAUSF. In a step S4, it calculates a hash of the expected result HXRES. These operations are the ones as disclosed in 33.501 annex A.4. It is here reminded that RES* is derived from RES and RAND according to the specification in this annex.

In a step S5, the AUSF sends a Challenge message to the SEAF in a Nausf_UE_Authentication_Authenticate Response message with KSEAF, AUTN and RAND which constitute a 5G Serving Environment Authentication Vector (5G SE AV). In case of 5G AKA HXRES* is also sent.

The SEAF then sends an Authentication request to the UE in a step S6, said authentication request including RAND, AUTN. On receiving of the RAND and AUTN, the UE computes a response RES in a step S7. Advantageously, this is an USIM in the UE which calculates a challenge result RES and returns RES, CK, IK to the UE. The UE then sends the Challenge Response message to the SEAF in a NAS message Authentication Response message in a step S8. In 5G AKA, in a step S9, the SEAF computes HRES* from RES*, and compares HRES* with HXRES*.

Then, in a step S10, the SEAF forwards the Response Challenge message to the AUSF in Nausf UE_authentication authenticate Request message. The AUSF then verifies the RES in a step S11. If the values are same, the SEAF considers the authentication as successful and sends the received RES*, in a Nausf_UE_authentication authenticate Request message containing the SUPI or SUCI and the SNN, to the AUSF in a step S12.

The AUSF verifies the message to support increased home control and if the verification is successful, the AUSF acts according to the authentication method.

The AUSF and UDM in the home network obtains confirmation that the UE has been successfully authenticated. Once AKA is successful, a UE setup Packet Data Unit session is opened with UPF in order to exchange user data on the user plane.

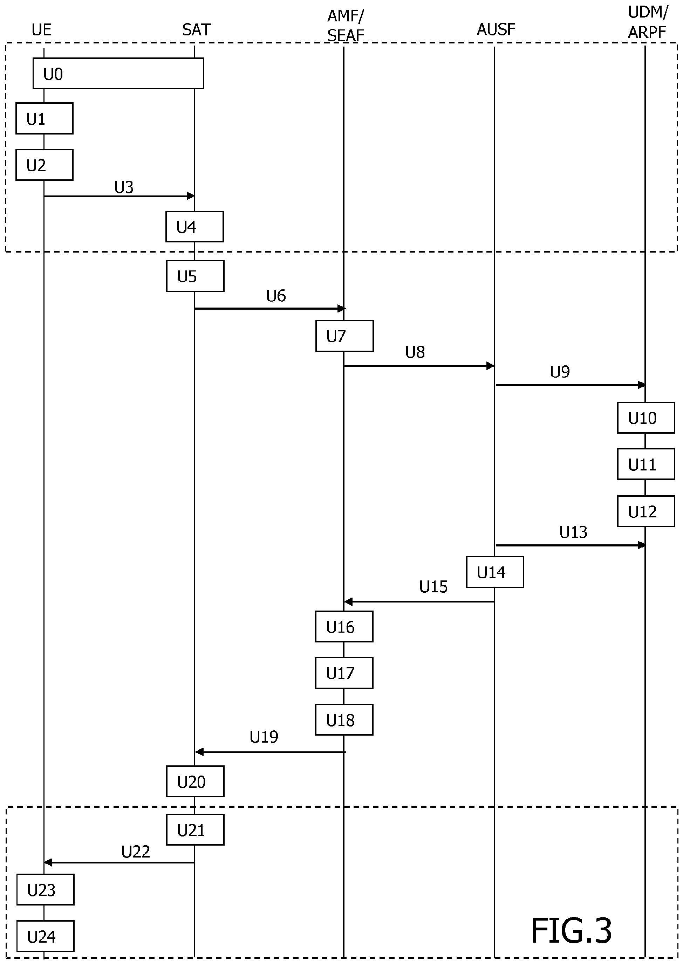

In [Figs 2 and 3], AMF/SEAF entities in 5G are replaced with MME entity in 4G and UDM/ARPF entities in 5G are replaced with HSS/AuC entities in 4G.

In 4G, there is no intermediary entity for the exchanges between MME and HSS/AuC. Consequently, the steps described for AUSF in 5G are executed by MME or HSS/AuC in 4G. Thus the exact contents of the steps are different in 4G compared to 5G and the number of steps in 4G is lower than in 5G. This has however no impact on the principle of the invention which reverses the roles in an authentication scheme as besides predefined in standard technical specifications, i.e. TS33.401 in 4G.

[Fig 3] describes the authentication flow of the invention. In a preliminary optional step U0, the UE and the satellite SAT setup a secure channel in order to mutually authenticate each other independently from the core of the method of the invention. This secure channel is for example certificate based.

According to the invention, in a step U1, the UE creates a 5G SE AV. The UE may do this by generating an AV with an Authentication Management Field (AMF) separation bit set to "1" as defined in TS 33.102. However, as the invention proposes a reverse authentication, it would be useful to use another bit in order to differentiate the flow from the previously known authentication flow.

The UE thus generates a fresh sequence number SQN and an unpredictable challenge RAND. The UE also calculates an expected result XRES* as defined in TS 33.501 and creates a 5G SE AV from RAND, AUTN, HXRES*. The UE also generates a SUCI as defined in TS 33.501. It is here reminded that a SUCI is a privacy-preserving identifier containing the concealed SUPI. The UE generates a SUCI using an ECIES-based protection scheme with the public key of the Home network that was securely provisioned to an USIM in the UE during the USIM provisioning process.

It is here highlighted that in the prior art flow and in the invention, the SUCI must be sent by the UE as the element enabling the network to identify the UE. This feature is based on the return, after deconcealment, of the SUPI by the home network to the visited network for lawful interception needs.

The UE then derives keys from the cipher key CK and the integrity key IK as defined in TS 33.501 till User Plane keys. In 5G AKA, it means that the couple of keys CK/IK gives a key for authentication server function KAUSF, which gives an anchor key KSEAF which gives a key for AMF KAMF which gives a key of the next generation Node B KGNB which gives a couple of cipher and integrity User Plane Keys KUPint & KUPenc. In a step U2, the UE generates first user plane data protected and encrypted with those keys and attached to NAS message.

The UE thus uses service link to send, in a step U3, to the satellite SAT the authentication vector 5G SE AV, the SUCI and the first UP data encrypted, through NAS signaling.

The satellite SAT stores all that information in a step U4 till it will be able to reopen a feeder link with ground network GN in a step U5. Thanks to feeder link, the satellite SAT then sends the received and stored information to AMF/SEAF in a step U6.

In a step U7, the AMF/SEAF stores HXRES* and first user data encrypted message. In a step U8, the AMF/SEAF then sends SUCI, RAND and AUTH to AUSF.

In a step U9, the AUSF sends them to UDM/ARPF as part of authentication request. In a step U10, the UDM invokes SIDF to deconceal the SUCI.

In a step U11, based on K and RAND, the UDM/ARPF verify the freshness of the received values by checking whether AUTN can be accepted. Typically a MAC-A is used for authenticity of the authentication token AUTN and SQN is used for freshness of the authentication token AUTN.

In a step U12, the UDM/ARPF computes RES, CK, IK and then computes RES* and KAUSF.

Then in a step U13, the UDM/ARPF returns SUPI, RES* and KAUSF to the AUSF. The AUSF generates KSEAF from KAUSF in a step U14. The AUSF then sends, in a step U15, to AMF/SEAF, RES*, SUPI and KSEAF.

It enables the AMF/SEAF to generate HRES* from RES* and to compare it to previously received HXRES* in a step U16.

The AMF/SEAF is then able to process the stored first user data message previously received in a step U17.

In a step U18, the AMF/SEAF processes the potential user data response message for the UE.

In a step U19, the AMF/SEAF sends to the satellite SAT the RES* and potential encrypted user data response message. It is here noted that the term "satellite" SAT designates potentially a different physical satellite as soon as the satellite of the reconnection can be in communication with the first satellite to which the first data were sent or directly with the serving ground network for this step and after this step U19.

In a step U20, the satellite SAT stores all the information till it will be able to reopen a service link with the UE in a step U21. At this time, in a step U22, the satellite SAT sends to UE, the RES* and potential user data response message.

The UE verifies the RES* in a step U23 and processes the potential user data response message in a step U24.

The above presented illustrative detailed description is made in a 5G context. The flowchart as presented on [Fig 3] also applies for 4G with several changes including the following mapping:

IMSI in 4G is equivalent to SUPI in 5G;

MME in 4G is equivalent to AMF/SEAF in 5G;

HSS in 4G is equivalent to UDM in 5G;

AuC in 4G is equivalent to AUSF/ARPF in 5G.

Also, in 4G, as the IMSI is not concealed and deconcealed in a SUCI, the content of step U1 is different as no SUCI is calculated in 4G. Also step U10 is not performed.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to perform a mutual authentication according to a predefined authentication scheme between a User Equipment UE and a communication serving ground network in a context where the UE having a permanent subscription identifier registered at a home network is connected via a non-geostationary satellite access in store and forward operation, said method comprising the steps of:
- for the UE, having first User Plane data to transmit, generating a random and UE authentication key hierarchy based on the random;
- for the UE, creating an authentication vector including the generated random, an authentication token, an expected result and generated keys as required by predefined authentication-scheme;
- for the UE, protect first User Plane data using generated authentication keys as defined in predefined authentication scheme;
- for the UE, while connected to the satellite, sending, for storage and forward, the authentication vector, the permanent subscription identifier and the protected first user plane data to the satellite;
- for the satellite, once connected to a serving ground network, forwarding the authentication vector, the permanent subscription identifier and the protected first user plane data to the serving ground network;
- for the serving ground network, storing an authentication expected result being part of the authentication vector and the protected first user plane data;
- for the serving ground network, forwarding the random, the authentication token and the permanent subscription identifier to the home network;
- for the home network, through a home network entity in charge of subscription information, verifying the authentication token, computing a Home Network key hierarchy and a Result;
- for the home network, sending the Result, generated keys as required by predefined authentication scheme and the permanent subscription identifier to the serving ground network;
- for the serving ground network, processing the encrypted first data to get first response data and protecting the first response data using corresponding received keys;
- for the serving ground network, sending the Result and the protected first response data to the satellite for storage and forward;
- for the satellite, once the satellite is again in connection with the UE, forwarding the Result and the protected first response data;
- for the UE, verifying the result and processing the protected first response data.

2. Method according to claim 1, wherein, the UE and the serving network operating in 5G and the permanent subscription identifier being a Subscription Permanent Identifier (SUPI), the method further comprises the step, for the UE, of calculating a Subscription Concealed Identifier (SUCI) from the SUPI of the UE, and, for the home network, the step of deconcealing the SUPI from the SUCI through a Unified Data Management entity home network entity in charge of subscription information, before verification of the authentication token.

3. Method according to one of claims 1 and 2, further including a preliminary step of, for the UE and the satellite, setting up a secure channel in order to mutually authenticate each other.

4. Method according to one of the previous claims, wherein the UE comprising an USIM, said steps of authentication vector creation and verification of the result are performed in the USIM.

5. Method according to one of previous claims, wherein the step of, for the UE, creating an authentication vector is such that the authentication vector is created with a dedicated Authentication Management Field (AMF) separation bit set to "1".

6. Method according to one of previous claims, wherein, the key hierarchy generation being further based on the use of a long-term key and the UE being also configured to implement an authentication of the art with a long-term key, the long-term key of said authentication method is distinct from the long term key used for the authentication with terrestrial network.

7. Method according to one of previous claims, wherein, it further includes the steps of, for the serving ground network:
- storing an integrity value of the expected result while storing the protected first user plane data in order to later on check the authenticity of the authentication token,
- calculating an integrity value of the Result received from the home network and comparing it to the stored one.

8. User equipment adapted to perform a mutual authentication with a communication serving ground network according to a predefined authentication scheme, said mutual authentication originating at the UE side in a context where said UE has a permanent subscription identifier registered at a home network and where said UE is connected via a non-geostationary satellite access in store and forward operation, said UE being configured to, when having first User Plane data to transmit:
- generate a random and a UE authentication key hierarchy;
- create an authentication vector including the generated random, an authentication token, an expected result and generated keys as required by predefined authentication scheme;
- protect first User Plane data using generated authentication keys as defined in predefined authentication scheme;
- while connected to the satellite, send, for storage and forward, the authentication vector, the permanent subscription identifier and the protected first user plane data to the satellite;
- once the satellite is again in connection with the UE, receive a Result and a protected first response data;
- verify the result and processing the protected first response data.

9. Communication serving ground network adapted to perform a mutual authentication with a User Equipment UE according to a predefined authentication scheme, said mutual authentication originating at the UE side in a context where said UE has a permanent subscription identifier registered at a home network and where said UE is connected via a non-geostationary satellite access in store and forward operation, said serving ground network being configured to:
- receive from a satellite connected to the serving ground network, an authentication vector including a generated random, an authentication token, an expected result and generated keys as required by predefined authentication scheme, a permanent subscription identifier and a protected first user plane data;
- store the protected first user plane data;
- forward the random, the authentication token and the permanent subscription identifier to the home network of the UE;
- receive from the home network a Result computed by the home network, verification of the authentication token, generated keys of a Home Network key hierarchy also computed by the home network as required by predefined authentication scheme and the permanent subscription identifier;
- process the encrypted first data in first response data and protect the first response data using corresponding received keys;
- send the Result and the protected first response data to the satellite for storage and forward to the UE once the satellite is again in connection with the UE.
